# EUROPÄISCHE PATENTSCHRIFT

(11) **EP 3 295 645 B1**
(45) Veröffentlichungstag und Bekanntmachung des Hinweises auf die Patenterteilung: **08.06.2022**
(21) Anmeldenummer: 16741871.4
(22) Anmeldetag: 27.06.2016
(51) Int. Cl.: H04L 9/40

(54) **VERFAHREN UND ANORDNUNG ZUR RÜCKWIRKUNGSFREIEN ÜBERTRAGUNG VON DATEN ZWISCHEN NETZWERKEN**
METHOD AND ARRANGEMENT FOR DECOUPLED TRANSMISSION OF DATA BETWEEN NETWORKS
PROCÉDÉ ET SYSTÈME DE TRANSMISSION SANS EFFET RÉTROACTIF DE DONNÉES ENTRE RÉSEAUX

(30) Priorität: 06.08.2015 DE 102015214993
(43) Veröffentlichungstag der Anmeldung: 21.03.2018
(73) Patentinhaber: Siemens Mobility GmbH, 81739 München (DE)
(72) Erfinder: BLÖCHER, Uwe, 82178 Puchheim (DE); FALK, Rainer, 85586 Poing (DE); REINERT, Jens, 38302 Wolfenbüttel (DE); WIMMER, Martin, 85579 Neubiberg (DE)
(86) Internationale Anmeldenummer: PCT/EP2016/064783
(87) Internationale Veröffentlichungsnummer: WO 2017/021060

(56) Entgegenhaltungen:
- WO-A1-2016/096599
- WO-A1-2016/156063
- WO-A1-2017/190997
- US-A1- 2005 129 033
- US-A1- 2010 162 399
- US-A1- 2012 291 089

## Beschreibung

Die Erfindung betrifft ein Verfahren und eine Anordnung zur rückwirkungsfreien Übertragung von Daten zwischen Netzwerken mit unterschiedlichen Sicherheitsanforderungen, beispielsweise zwischen industriellen Steuerungsnetzen und weniger kritischen Diagnosenetzwerken.

Sicherheitslösungen für die Übertragung von Daten zwischen Netzen mit unterschiedlichen Sicherheitsanforderungen, sogenannten Cross-Domain-Security-Lösungen, werden bislang in speziellen Bereichen wie z.B. der Behördenkommunikation verwendet, in denen hohe Sicherheitsanforderungen gelten und in denen eine Sicherheitsklassifikation von Dokumenten bzw. Informationen vorliegt. Durch eine Cross-Domain-Lösung wird ein automatisierter sicherer Austausch von Dokumenten und Nachrichten, wie z.B. Emails, zwischen Zonen mit unterschiedlich hohen Sicherheitsanforderungen realisiert. Eine wesentliche Komponente ist dabei eine Datendiode, die eine Unidirektionalität der Datenkommunikation, also einen Transport von Daten, lediglich in eine Richtung sicherstellt.

Für die Kopplung von industriellen Steuerungsnetzen, die üblicherweise hohe Sicherheitsanforderungen haben, mit einem Diagnosenetzwerk, einem Büronetzwerk, oder einem öffentlichen Internet, die üblicherweise nur geringen Sicherheitsanforderungen genügen, werden bisher herkömmliche Firewalls verwendet, die die Datenkommunikation nach konfigurierbaren Filterregeln filtern. Die Datenkommunikation wird dabei beispielsweise abhängig von den Adressen der Kommunikationspartner und dem verwendeten Kommunikationsprotokoll zugelassen oder blockiert. Die Sicherheitsanforderungen betreffen insbesondere die Verfügbarkeit und die Integrität der Datenübertragung. Dies ist eine andere Zielsetzung als der Schutz der Vertraulichkeit, wie sie bei Büroanwendungen oder behördlichen Anwendungen häufig gefordert ist.

Aus der US8068415 B2 ist eine Datendiode bestehend aus einer Sendekomponente und einer Empfangskomponente, die mit einer optischen Übertragungsleitung oder abgeschirmten gedrehten Kupferleitungen verbunden sind, bekannt, die dadurch eine unidirektionale Datenübertragung realisieren. Die Sendekomponente stellt dabei einen Proxy dar, der in die Datenkommunikation eingebracht wird. Eine solche Sendekomponente kann nicht zuverlässig eine rückwirkungsfreie Datenübertragung gewährleisten. Außerdem befindet sich eine solche Sendekomponente im Kommunikationspfad des sicherheitskritischen Netzwerks, so dass eine Ende-zu-Ende-Kommunikation zwischen Netzwerkkomponenten unterbrochen wird.

WO2016/096599A1 offenbart ein Verfahren und eine Vorrichtung zum rückwirkungsfreien Erfassen von Daten von mindestens einer Einrichtung, die in einem ersten Netzwerk mit hoher Sicherheitsanforderung angeordnet ist, in einem zweiten Netzwerk mit geringer Sicherheitsanforderung. Das Dokument US 2010/162399 offenbart relevanten Stand der Technik.

Eine Datenübertragung zwischen zwei Netzwerken ist dann rückwirkungsfrei, wenn bei oder durch die Datenübertragung keine Signale bzw. Daten in das sendende Netzwerk eingebracht werden oder Daten im ersten Netz verändert werden können. Die Rückwirkungsfreiheit soll dabei nicht nur bezüglich einem Einbringen oder Ändern von Signalen durch einen externen Kommunikationsteilnehmer gewährleistet sein, die Lösung selbst soll rückwirkungsfrei sein. Bekannte Datendioden, die einen limitierten Rückkanal z.B. für die Bestätigung von TCP-Paketen (Acknowledgement), realisieren, sind somit nicht als rückwirkungsfrei zu betrachten. Auch sind Datendiodenlösungen, die eine spezielle Sendekomponente erfordern, die in den Kommunikationspfad eingebracht werden muss, nicht geeignet. Solche Datendioden garantieren somit nicht die Rückwirkungsfreiheit und erfüllen nicht die erforderliche Güte, wie sie beispielsweise bei der Zulassung von industriellen Steuerungsnetzen gefordert werden. Des Weiteren ist eine derartige Datendiode nicht für hoch verfügbare Netzwerke, beispielsweise mit redundanten Übertragungswegen oder Ringtopologien, geeignet, da eine zentrale Sendekomponente einen Bruch der Redundanz des Netzwerks darstellt bzw. mehrere Datendioden erfordern würde, die teuer und aufwendig einzurichten sind.

Es ist somit die Aufgabe der Erfindung, eine Lösung zur rückwirkungsfreien Datenübertragung zwischen Netzwerken, insbesondere mit unterschiedlichen Sicherheitsanforderungen und hoher Verfügbarkeit einfach und kostengünstig bereitzustellen.

Die Aufgabe wird durch die in den unabhängigen Ansprüchen beschriebenen Maßnahmen gelöst. In den Unteransprüchen sind vorteilhafte Weiterbildungen der Erfindung dargestellt.

Im erfindungsgemäßen Verfahren zur rückwirkungsfreien Übertragung von Daten zwischen Netzwerken mit unterschiedlicher Sicherheitsanforderung werden in einem ersten Netzwerk mit hoher Sicherheitsanforderung erste Daten von einer ersten Anwendung in einer Kommunikation ausschließlich zwischen Komponenten innerhalb des ersten Netzwerkes über mehrere Übertragungsleitungen übertragen, wobei Daten im ersten Netzwerk von mindestens einer Mithöreinrichtung je Übertragungsleitung rückwirkungsfrei erfasst und in ein zweites Netzwerk mit geringeren Sicherheitsanforderungen übermittelt werden.

Die ersten Daten einer ersten Anwendung im ersten Netzwerk werden also ausschließlich zwischen Komponenten innerhalb des ersten Netzwerkes übertragen und stellen somit eine Ende-zu-Ende-Kommunikation dar. Diese Ende-zu-Ende-Kommunikation wird in der vorliegenden Erfindung nicht aufgebrochen, da die Kommunikation lediglich mitgehört wird, aber nicht durch eine separate, nicht zum ersten Netzwerk gehörende Komponente aufgebrochen wird. Dies gewährleistet zuverlässig die Rückwirkungsfreiheit, d.h. es ist sichergestellt, dass keinerlei neue Daten durch die Übertragung in einem zweiten Netzwerk in das erste Netzwerk eingestreut werden. Desgleichen werden keine Daten innerhalb des ersten Netzwerkes verändert oder Daten dem ersten Netzwerk hinzugefügt, da das Mithören von Daten lediglich ein Kopieren und Übertragen der kopierten Daten bzw. Datenpakete in ein zweites Netzwerk umfasst. Die Datenpakete oder Daten werden dabei in der Mithöreinrichtung nicht auswertet. Das Erfassen der ersten Daten durch eine Mithöreinheit stellt eine für die Kommunikation im ersten Netzwerk absolut transparente Funktion dar.

Durch den Einsatz von mindestens einer Mithöreinheit je Kommunikationsverbindung wird sichergestellt, dass in einem redundant ausgelegten ersten Netzwerk auch bei Ausfall einer der Kommunikationsverbindungen die ersten Daten zuverlässig von den verbleibenden Kommunikationsverbindungen erfasst werden können. Werden Daten über mehrere Kommunikationsverbindungen entweder gleichzeitig oder auch im Wechsel übertragen, so wird auch hier durch jeweils mindestens eine Mithöreinheit je Kommunikationsverbindung ein Erfassen aller Daten sichergestellt. Es können aus dem Erfassen der Daten auf unterschiedlichen Kommunikationsverbindungen auch weitere Informationen oder Plausibilitätsprüfungen abgeleitet werden. Auch bei einer bidirektionalen Kommunikation zwischen den Komponenten eines ersten Netzwerkes über unterschiedliche Kommunikationsverbindungen wird die Erfassung der Daten in beide Richtungen sichergestellt.

Das Verfahren ist ebenfalls für das Abgreifen von echtzeitkritischer Kommunikation geeignet, da das Kopieren der ersten Daten ohne signifikante Verzögerung durchgeführt werden kann. Dadurch können Echtzeit-relevante Informationen, z.B. für eine Echtzeit-kritische Steuerung oder Regelung eines Automatisierungssystems, rückwirkungsfrei abgegriffen und ausgewertet werden.

Eine erste Anwendung ist beispielsweise eine Diagnosefunktion, bei der Diagnosenachrichten innerhalb eines Steuerungsnetzwerkes bzw. eines Segmentes des Steuerungsnetzwerkes von einer Komponente des Steuerungsnetzwerkes zu einer als Diagnose-Server ausgebildeten Komponente innerhalb des Steuerungsnetzwerkes übertragen werden. Eine zweite Anwendung kann beispielsweise die Steuerungsfunktion sein, bei der ebenfalls zwischen den Komponenten des ersten Netzwerkes Steuerungsnachrichten beispielsweise für ein Zugsicherungsnetzwerk übertragen werden. Die Mithöreinrichtung stellt keine zusätzliche Sendekomponente, die beispielsweise als Proxy in die Kommunikation eingeschleust ist, dar. Es werden lediglich Daten, die ohnehin übertragen werden, passiv mitgehört. Es gibt somit auch keine Zusatzkomponente zum expliziten Senden von Daten vom zweiten Netzwerk in das erste Netzwerk hinein.

In einer vorteilhaften Ausführungsform werden zweite Daten einer zweiten Anwendung zwischen Komponenten innerhalb des zweiten Netzwerkes übertragen, wobei die Daten im zweiten Netzwerk von mindestens einer zweiten Mithöreinrichtung erfasst und in das erste Netzwerk übermittelt werden. Im ersten Netzwerk wird eine rekonstruierte Kommunikation der zweiten Anwendung aus den erfassten Daten erstellt und lediglich bei erfolgreicher Rekonstruktion werden zweite Daten an Komponenten des ersten Netzwerkes übermittelt. Es werden also zwei Mithöreinrichtungen kombiniert, die jedoch jeweils eigenständig funktionieren. Eine erste realisiert wie zuvor beschrieben eine rückwirkungsfreie Einwegkommunikation vom ersten Netzwerk zum zweiten Netzwerk. Eine zweite realisiert einen kontrollierten Rückkanal. Die erste Mithöreinrichtung ist dabei weiterhin wie oben beschrieben rückwirkungsfrei. Die zweite Komponente kann zwar eine Kommunikation im ersten Netzwerk einschleusen, aber ohne dass eine Netzwerkverbindung vom zweiten Netzwerk zum ersten Netzwerk besteht. Dadurch wird eine Beeinflussung der Kommunikation im ersten Netzwerk durch eine Kommunikation im zweiten Netzwerk zuverlässig verhindert.

Dies ermöglicht es, Anweisungen an oder Konfigurationsänderungen für die erste Anwendung im ersten Netzwerk aus dem zweiten Netzwerk in das erste Netzwerk zu übertragen. Somit können beispielsweise geänderte Diagnosezeitpläne oder geänderte Diagnoseabfragen mit hoher Sicherheit gegenüber Datenmanipulation eingebracht werden. Eine Beeinflussung des sicherheitsrelevanten Netzwerkes durch die Übertragung der zweiten Daten ist minimiert, da nur eine kontrollierte Kommunikation im ersten Netzwerk verwendet wird, bei der die mitgehörten Nutzdaten des zweiten Netzwerks verwendet werden, um im ersten Netzwerk eine Datenkommunikation zu bilden und in das erste Netzwerk einzuschleusen. Da keine direkte Netzwerckommunikation vom zweiten Netzwerk zum ersten Netzwerk stattfindet, sondern innerhalb des ersten Netzwerks eine Datenkommunikation gebildet wird, ist eine Beeinflussung der Datenübertagung im ersten Netzwerk zuverlässig verhindert. Das Bilden und Senden der Datenpakete der mitgehörten Nutzdaten des zweiten Netzwerks erfolgt dabei durch eine Komponente des ersten Netzwerks, sodass eine Beeinflussung der Datenübertragung des ersten Netzwerks durch das zweite Netzwerk prinzipbedingt verhindert ist.

In einer vorteilhaften Ausführungsform werden alle erfassten Daten in einer Datenspeichereinheit ungefiltert abgespeichert.

Dies ermöglicht insbesondere ein schnelles Erfassen von Daten einer Echtzeit-relevanten ersten bzw. zweiten Anwendung.

In einer vorteilhaften Ausführungsform werden die ersten Daten durch eine Filtereinheit im zweiten Netzwerk bzw. die zweiten Daten durch eine Filtereinheit im ersten Netzwerk gefiltert.

Dies führt zu einer frühzeitigen Reduktion des Datenvolumens und erleichtert eine Nachverarbeitung der erfassten Daten.

In einer vorteilhaften Ausführungsform werden die ersten bzw. zweiten Daten der ersten bzw. zweiten Anwendung durch eine Auswertung der erfassten Daten bezüglich einer Anwendungsspezifischen Kennung gefiltert.

Werden beispielsweise die Diagnosedaten auf einem logisch separierten Diagnosenetzwerk des ersten Netzwerkes übertragen, so sind entsprechende Diagnosedaten durch eine entsprechende Diagnosenetzwerkskennung, z.B. ein VLAN-Tag gekennzeichnet und separierbar. Somit können zuverlässig die interessierenden Daten - hier Diagnosedaten - einer ersten Anwendung aus dem gesamten erfassten Datenstrom gefiltert werden.

In einer vorteilhaften Ausführungsform wird im zweiten bzw. ersten Netzwerk eine rekonstruierte Kommunikation der ersten bzw. zweiten Anwendung aus den ersten bzw. zweiten Daten in einer Rekonstruktionseinheit erstellt.

Dies hat den Vorteil, dass mit hoher Sicherheit nur die gewünschten ersten bzw. zweiten Daten der gewünschten ersten bzw. zweiten Anwendung erkannt werden. Durch die Rekonstruktion der Kommunikation können fehlerhaft als zur ersten bzw. zweiten Anwendung gehörend gefilterte Daten identifiziert und eliminiert werden. Es kann dadurch auch eine Störung oder Manipulation der ersten bzw. zweiten Anwendung identifiziert werden.

In einer vorteilhaften Ausführungsform werden zur Rekonstruktion der Kommunikation der ersten bzw. zweiten Anwendung nur eindeutig zu einer Anfragenachricht gehörende Antwort-Datenpakete verwendet.

In einer weiteren vorteilhaften Ausführungsform werden lediglich die Antwort-Datenpakete, die in einem vorgegebenen zeitlichen Abstand nach einer Anfragenachricht empfangen werden, zur Rekonstruktion verwendet.

Dadurch können beispielsweise durch Manipulation im ersten Netzwerk eingebrachte Datenpakete erkannt und als ungültig verworfen und nicht zur Rekonstruktion verwendet werden.

In einer vorteilhaften Ausführungsform werden die ersten Daten bzw. die zweiten Daten in einem Datenserver abgelegt und durch ein externes Kommando, auf Anfrage von Komponenten des zweiten bzw. ersten Netzwerks oder vom Datenserver selbst initiiert an Komponenten des zweiten bzw. ersten Netzwerks übertragen.

Dies ermöglicht einerseits eine verzögerte Übermittlung bzw. Einbringung der ersten bzw. zweiten Daten in das zweite bzw. erste Netzwerk. Somit kann entweder eine zeitlich gesteuerte Übermittlung der Daten in das jeweils andere Netzwerk realisiert werden. Es kann dadurch auch sichergestellt werden, dass erst bei vollständig in das jeweils andere Netzwerk übertragenen Daten diese in Komponenten des Netzwerks selbst eingespielt werden.

In einer vorteilhaften Ausführungsform werden alle erfassten Daten in einer Datenspeichereinheit ungefiltert abgespeichert.

Vorteilhafterweise wird dabei ein Übermittlungszeitpunkt der erfassten Daten erfasst wird und der Übermittlungszeitpunkt zusammen mit den erfassten Daten, insbesondere digital signiert, abgespeichert wird.

Dies ermöglicht ein einfaches Logging der Einwegkommunikation. Werden die erfassten Daten und der Übermittlungszeitpunkt digital signiert abgespeichert kann eine nachträgliche Änderung der Daten detektiert werden.

Die erfindungsgemäße Anordnung zur rückwirkungsfreien Übertragung von Daten zwischen Netzwerken mit unterschiedlicher Sicherheitsanforderung, wobei in einem ersten Netzwerk mit hoher Sicherheitsanforderung erste Daten von einer ersten Anwendung in einer Kommunikation ausschließlich zwischen Komponenten innerhalb des ersten Netzwerkes über mehrere Kommunikationsverbindungen übertragen werden, umfasst mindestens eine Mithöreinrichtung je Kommunikationsverbindung, die derart ausgebildet ist, Daten im ersten Netzwerk von jeweils einer Kommunikationsverbindung rückwirkungsfrei zu erfassen und in ein zweites Netzwerk mit geringeren Sicherheitsanforderungen zu übermitteln und eine Datenspeichereinheit, die im zweiten Netzwerk angeordnet ist und die erfassten Daten speichert.

Mittels mindestens einer Mithöreinheit je Kommunikationsverbindung wird ein rückwirkungsfreies Netzwerk-Monitoring bzw. ein Seitenkanal etabliert, um innerhalb eines ersten sicherheitsrelevanten Netzwerkes übertragene Daten zu erfassen. Damit ist die Anordnung insbesondere für sicherheitsrelevante Netzwerke, wie Steuerungsnetze, anwendbar, bei denen sicherheitsrelevante Steuerungskommunikationen über dieselbe physikalische Infrastruktur, wie beispielsweise Diagnosedaten, übertragen werden. Durch Einsatz mehrerer Mithörkomponenten, insbesondere mindestens jeweils einer Mithörkomponente pro Kommunikationsverbindung, werden auch bei Ausfall einer Kommunikationsverbindung zuverlässig die ersten Daten erfasst und in das andere Netzwerk übertragen. Werden die mehreren Kommunikationsverbindungen für unterschiedliche Teildatenmengen, wie bspw. Signalisierungsnachrichten und Nutzdaten, der ersten Anwendung verwendet, so können alle Teildatenmengen zuverlässig erfasst werden.

Bei einer Ringtopologie des ersten Netzwerks wird beispielsweise an zwei Stellen, beispielsweise vor und hinter einem Diagnose-Server, oder bei redundanten Übertragungswegen auf jedem Redundanzsegment eine Mithöreinrichtung angeordnet. Die Anordnung ist damit für hochverfügbare Netzwerke, beispielsweise Sicherheitsnetze, geeignet.

In einer vorteilhaften Variante, bei der zweite Daten einer zweiten Anwendung zwischen Komponenten des zweiten Netzwerkes übertragen werden, umfasst die Anordnung zusätzlich mindestens eine zweite Mithöreinrichtung, die derart ausgebildet ist, Daten im zweiten Netzwerk zu erfassen und in das erste Netzwerk zu übermitteln, sowie eine zweite Rekonstruktionseinheit, die derart ausgebildet ist, eine rekonstruierte Kommunikation der zweiten Anwendung aus den erfassten Daten zu erstellen und lediglich bei erfolgreicher Rekonstruktion zweite Daten an Komponenten des ersten Netzwerkes zu übermitteln.

Durch das passive Mithören der Kommunikation im zweiten Netzwerk ist keine dedizierte Sende- bzw. Empfangskomponente für die Datenübertragung zwischen den Netzwerken notwendig. Eine Beeinflussung des ersten Netzwerkes durch die Datenübertragung ist somit minimiert.

In einer vorteilhaften Ausführungsform ist die erste bzw. zweite Mithöreinheit als ein Netzwerkauskoppler, beispielsweise einen Network Tap, oder als eine Einrichtung mit einer Netzwerkschnittstelle zum ersten Netzwerk, deren Kontakte für Sendesignale deaktiviert ausgebildet sind oder als Auskoppeleinrichtung für elektromagnetische Abstrahlung ausgebildet.

Alle genannten Ausbildungen einer Mithöreinheit erfassen die Daten auf der Kommunikationsverbindung, an der sie angeordnet sind, in passiver Weise. D.h., es werden lediglich Daten bzw. Signale erfasst, ohne eine Möglichkeit, selbst Daten in die Kommunikationsverbindung einzubringen. Dies schließt auch weiterleiten von veränderten Signalen bzw. Daten innerhalb des jeweiligen Netzwerks mit ein. Solche Mithöreinrichtungen sind verfügbar und kostengünstig zugänglich. Es wird so in einfacher Weise eine Kopie der Signale bzw. Daten erreicht und somit ein Protokollbruch verhindert bzw. eine Protokollunabhängigkeit erreicht.

In einer vorteilhaften Ausführungsform umfasst die Anordnung eine Datenspeichereinheit, die derart ausgebildet ist, alle erfassten Daten ungefiltert abzuspeichern.

In einer vorteilhaften Ausführungsform umfasst die Anordnung zusätzlich eine Filtereinheit, die derart ausgebildet ist, die ersten Daten bzw. die zweiten Daten aus allen erfassten Daten zu filtern. Des Weiteren umfasst die Anordnung zusätzlich eine Rekonstruktionseinheit, die derart ausgebildet ist, zur Rekonstruktion der Kommunikation der ersten Anwendung nur eindeutig zu einer Anfragenachricht gehörende Antwort-Datenpakete zur Auswertung zu verwenden.

Somit wird die erfasste Datenmenge reduziert und beispielsweise auf die Kommunikation einer bestimmten Anwendung reduziert.

In einer vorteilhaften Ausführungsform umfasst die Anordnung zusätzlich einen Datenserver, der derart ausgebildet ist, die rekonstruierten ersten bzw. zweiten Daten zu speichern.

Dadurch kann eine zeitliche Steuerung der Übertragung der Daten in das jeweils empfangende Netz durchgeführt werden. Zum anderen können sukzessive abgehörte Daten gesammelt und bei vollständiger Verfügbarkeit gesammelt in das empfangende Netz übermittelt werden. Der Datenserver kann dabei derart eingerichtet sein, die Daten durch ein externes Kommando, auf Anfrage von Komponenten des empfangenden Netzwerks oder vom Datenserver selbst initiiert in das empfangende Netz zu übertragen.

Das erfindungsgemäße Computerprogrammprodukt, das direkt in einen Speicher eines digitalen Computers ladbar ist, umfasst Programmcodeteile, die dazu geeignet sind, die Schritte des beschriebenen Verfahrens durchzuführen.

Ausführungsbeispiele der Erfindung sind in den Zeichnungen beispielhaft dargestellt und werten anhand der nachfolgenden Beschreibung näher erläutert. Es zeigen:
- Figur 1: ein ersten Ausführungsbeispiel des erfindungsgemäßen Verfahrens als Ablaufdiagramm;
- Figur 2: ein zweites Ausführungsbeispiel des erfindungsgemäßen Verfahrens als Ablaufdiagramm;
- Figur 3: ein erstes Ausführungsbeispiel einer erfindungsgemäßen Anordnung zur Übertragung von Daten von einem sicherheitskritischen ersten Netzwerk in ein weniger sicherheitskritisches zweites Netzwerk mit einer Ausführungsform einer erfindungsgemäßen Mithöreinheit in schematischer Darstellung; und
- Figur 4: ein zweites Ausführungsbeispiel einer erfindungsgemäßen Anordnung zur Übertragung von Daten von einem wenig sicherheitskritischen zweiten Netzwerk in ein sicherheitskritisches erstes Netzwerk in schematischer Darstellung.

Einander entsprechende Teile sind in allen Figuren mit den gleichen Bezugszeichen versehen.

Ein rückwirkungsfreies Übertragen von Daten zwischen Netzwerken ist insbesondere dann notwendig, wenn für die involvierten Netzwerke unterschiedliche Sicherheitsanforderungen vorliegen. Netzwerke mit hohen Sicherheitsanforderungen sind beispielsweise ein Steuerungsnetzwerk in einer Automatisierungsanlage, über das beispielsweise Fertigungskomponenten miteinander verbunden und gesteuert werden. Ähnliche Anforderungen liegen auch in Steuerungsnetzwerken für beispielsweise Zugsicherungsnetzwerke oder Energieverteilungsanlagen vor. Solche sicherheitskritischen Netzwerke sind zumeist geschlossene oder zumindest zugangskontrollierte Steuerungsnetzwerke mit bidirektionaler Kommunikation zwischen einzelnen Komponenten, wie beispielsweise Feldgeräten und Steuerrechnern, Diagnoserechnern oder Überwachungsrechnern. Die Kommunikation ist häufig echtzeitkritisch und/oder sicherheitskritisch. Es liegt eine Ende-zu-Ende-Kommunikation innerhalb des Steuerungsnetzwerkes vor.

Um eine hohe Verfügbarkeit in Steuerungsnetzen zu gewährleisten, ist das Kommunikationsnetzwerk üblicherweise mit redundanten Kommunikationsverbindungen bzw. Übertragungswegen, wie z.B. einem doppelten Bussystem oder einer Ringtopologie ausgestattet. Es können auch mehrere Kommunikationsverbindungen abhängig von der Netzlast verwendet werden. Häufig werden über die gleichen Kommunikationsverbindungen Daten verschiedener Anwendungen, wie zur Steuerung oder zur Diagnose der Komponenten, übertragen und lediglich eine virtuelle Trennung beispielsweise durch separate VLANs realisiert. Diagnosedaten werden beispielsweise von Komponenten, wie Feldgeräte zu einem Diagnose-Server innerhalb des geschlossenen Steuerungsnetzwerkes übertragen.

Die Auswertung der Diagnosedaten wird dagegen üblicherweise nicht in diesem geschlossenen Steuerungsnetzwerk, sondern in einem Büronetzwerk mit geringeren Sicherheitsanforderungen durchgeführt. Um nun eine Übertragung von ersten Daten einer ersten Anwendung, hier beispielsweise Diagnosedaten einer Diagnoseanwendung, in ein zweites weniger sicherheitskritisches Netzwerk, hier das Büronetzwerk, ohne Beeinflussung des ersten Netzwerkes durchführen zu können, werden folgende Schritte durchgeführt:
Der erste Verfahrensschritt 1 stellt das Übertragen von ersten Daten einer ersten Anwendung im ersten Netz dar. Im zweiten Verfahrensschritt 2 werden die ersten Daten von mindestens einer Mithöreinheit je Kommunikationsverbindung im ersten Netzwerk erfasst und dupliziert. Im Verfahrensschritt 3 werden die duplizierten Daten von der Mithöreinrichtung in ein zweites Netzwerk übertragen.

Die Mithöreinheit greift dabei lediglich die ersten Daten von der Kommunikationsverbindung ab, d.h. kopiert die Daten und leitet die kopierten Daten in das zweite Netzwerk. Die ersten Daten werden dabei im ersten Netzwerk nicht verändert, sondern ohne Verzögerung an den Kommunikationspartner im ersten Netzwerk weitergeleitet. Das Mithören ist im ersten Netzwerk nicht detektierbar. Es werden keinerlei zusätzliche Daten in das erste Netzwerk durch die Mithöreinheit eingebracht noch bei der Duplizierung erzeugt. Ebenfalls ist eine Veränderung der innerhalb des ersten Netzwerkes weitergeleiteten Daten ausgeschlossen. Das Mithören ist somit im ersten Netzwerk eine transparente und gegenüber den ersten Daten passive Aktion.

Es gibt keine zusätzliche Sendekomponente, die die Kommunikation verändern oder verzögern könnte. Somit eignet sich das Verfahren insbesondere für echtzeitrelevante Kommunikation. Durch die Verwendung von mindestens einer Mithöreinrichtung je Kommunikationsverbindung wird sichergestellt, auch bei Ausfall einer Kommunikationsverbindung oder bei zeitlich zwischen den Kommunikationsverbindungen wechselnder Übertragung, alle übertragenen ersten Daten der Kommunikation zu erfassen. Ist das erste Netzwerk in Ringtopologie aufgebaut, so wird jede der beiden Kommunikationsverbindungen beispielsweise in der Nähe des Diagnoseserver mitgehört.

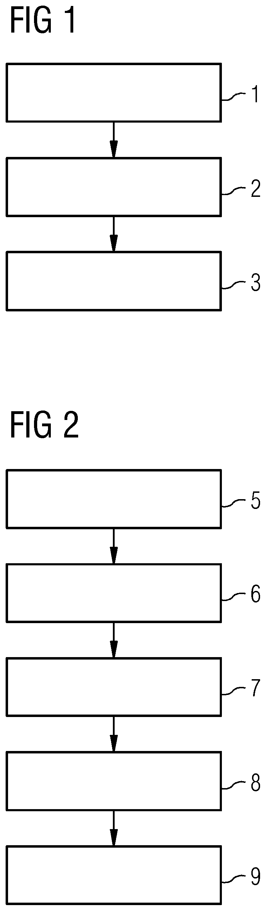

Figur 2 zeigt eine weitere Ausführungsform des Verfahrens, bei der zusätzlich zur Kommunikation vom ersten ins zweite Netzwerk auch eine Kommunikation vom zweiten Netzwerk mit geringeren Sicherheitsanforderungen in das erste sicherheitskritische Netzwerk dargestellt wird.

Im Verfahrensschritt 5 werden zweite Daten einer zweiten Anwendung zwischen Komponenten innerhalb des zweiten weniger sicherheitskritischen Netzwerkes übertragen. Dies können beispielsweise Konfigurationsdaten oder auch Software sein, die vom zweiten Netzwerk dem ersten Netzwerk verfügbar gemacht werden sollen. Auch hier ist sicherzustellen, dass das Füllen beispielsweise eines Daten- bzw. Ladeservers im ersten Netzwerk die Steuerungskommunikation nicht beeinflussen kann. Im Verfahrensschritt 6 werden dazu Daten im zweiten Netzwerk von mindestens einer zweiten Mithöreinrichtung erfasst und im Verfahrensschritt 7 in das erste Netzwerk übermittelt. Beim Verfahrensschritt 8 wird nun aus den erfassten Daten eine rekonstruierte Kommunikation der zweiten Anwendung erstellt und im Verfahrensschritt 9 lediglich dann an das erste Netzwerk übermittelt, wenn die zweiten Daten erfolgreich rekonstruiert wurden.

Die in das zweite Netz übermittelten Daten werden in einer Datenspeichereinheit gespeichert. Anschließend können die ersten Daten durch eine Filtereinheit im zweiten Netzwerk aus allen erfassten Daten gefiltert werden. Entsprechend ist ein Filtern der zweiten Daten nach der Übertragung im ersten Netzwerk möglich. Dazu kann beispielsweise ein VLAN-Tag oder eine sonstige Anwendungskennung, in den Datenpaketen ausgewertet werden. Nachfolgend kann aus den gefilterten ersten bzw. zweiten Daten die Kommunikation der ersten bzw. zweiten Anwendung rekonstruiert werden. Dadurch kann sichergestellt werden, dass erfasste Daten der richtigen Anwendung zugeordnet werden und beispielsweise eine fehlerhafte Kommunikation innerhalb der ersten bzw. zweiten Anwendung registriert werden. Es können daraus dann Maßnahmen beispielsweise eine Warnmeldung oder ein Nichtberücksichtigen der entsprechenden Daten abgeleitet werden. Dies kann weiter optimiert werden, wenn erfasste Datenpakete eindeutig einer Anfragenachricht zugeordnet werden können. Des Weiteren kann die Empfangszeit eines Antwort-Datenpaketes auf eine Anfragenachricht auf einen vorgegebenen zeitlichen Abstand beschränkt werden und lediglich Datenpakete innerhalb dieses vorgegebenen zeitlichen Abstandes zur Rekonstruktion verwendet werden.

Die in das zweite bzw. erste Netzwerk übermittelten Daten können auch ungefiltert abgespeichert werden und zur Überwachung des ersten Netzwerkes verwendet werden. Dazu wird vorteilhafterweise ein Übertragungszeitpunkt der erfassten Daten erfasst. Die erfassten Daten sowie der Übertragungszeitpunkt werden vorteilhafterweise digital signiert abgespeichert. Damit kann eine eventuelle Manipulation der Daten festgestellt werden bzw. eine Auswertung auf die Daten mit korrekter digitaler Signatur eingeschränkt werden. Daraus lassen sich Rückschlüsse auf eine mögliche Manipulation der Daten ermitteln.

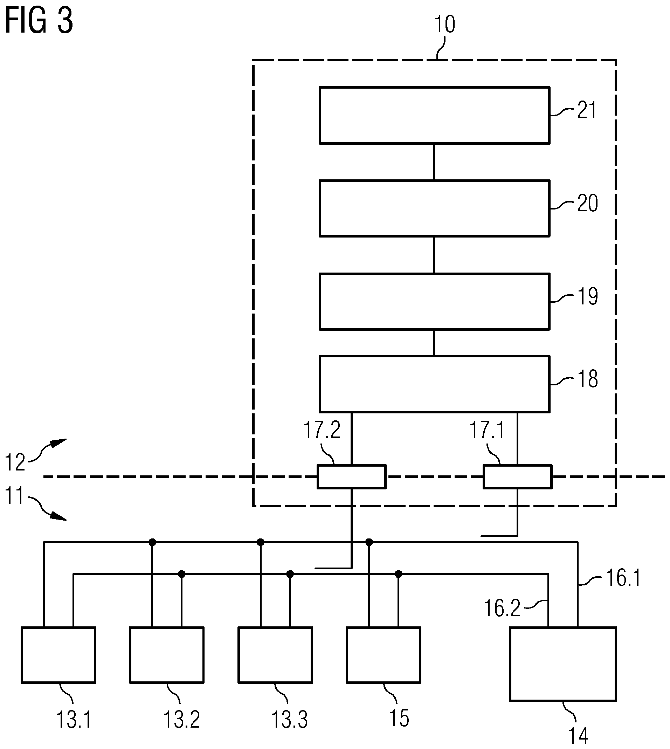

Figur 3 zeigt nun eine Anordnung 10 zur Übertragung von ersten Daten aus einem ersten Netzwerk 11 mit hohen Sicherheitsanforderungen in ein zweites Netzwerk 12 mit geringeren Sicherheitsanforderungen. Dabei sind mehrere Komponenten 13.1, 13.2, 13.3, wie beispielsweise Feldgeräte und ein Steuerrechner 15 sowie ein Diagnoseserver 14 über ein redundantes erstes Netzwerk miteinander verbunden. Das redundante Netzwerk ist hier beispielsweise als doppelter Bus mit Kommunikationsverbindungen 16.1, 16.2 dargestellt. Jede Komponente 13.1, 13.2, 13.3, 14, 15 ist mit jeweils einer Netzwerkschnittstelle mit einer der beiden Kommunikationsverbindungen 16.1, 16.2 verbunden. Über die Kommunikationsverbindungen 16.1, 16.2 werden hier echtzeitkritische, safety-kritische Messdaten und Steuerdaten übertragen. Nicht dargestellt sind eventuell vorhandene Netzwerkkomponenten, wie Switche oder Hubs. Als Netzwerkprotokoll wird beispielsweise das Internetprotokoll gemäß Version 4 oder Version 6 verwendet. Über die Netzwerkinfrastruktur werden neben den hoch sicherheitskritischen Steuerdaten auch Diagnosedaten übertragen. Diese können z.B. über ein Protokoll einer standardisierten vereinheitlichten Architektur einer offenen Plattformkommunikation, OPC UA Protokoll, ein einfaches Netzwerkverwaltungsprotokoll, SNMP oder beispielsweise ein syslog-Protokoll übertragen werden.

Ziel ist es nun, erste Daten, hier beispielsweise die Diagnosedaten, rückwirkungsfrei für das erste Netzwerk 11 und unter Wahrung der Integrität der Daten in das zweite Netzwerk 12 zu übertragen. Dort findet dann eine Auswertung der ersten Daten statt. Dazu ist mindestens eine Mithöreinrichtung 17.1, 17.2, der Anordnung 10 jeweils einer der redundanten Kommunikationsverbindungen 16.1, 16.2 zugeordnet. Die beiden Mithöreinrichtungen 17.1, 17.2 erfassen unabhängig voneinander jeweils die auf der ersten bzw. zweiten Kommunikationsverbindung 16.1, 16.2 übertragenen Daten, erstellen eine Kopie der Daten, die dann in das zweite Netzwerk 12 zu einer Datenspeichereinheit 18 übertragen und dort gespeichert werden. Die Datenspeichereinheit 18 der Anordnung 10 kann zusätzlich den Zeitpunkt der Übertragung der ersten Daten in das zweite Netzwerk 12 erfassen und als Logging-Daten beispielsweise mit einer über Daten und Zeitpunkt berechneten digitalen Signatur abspeichern.

Die Mithöreinrichtungen 17.1, 17.2 sind rein passive Netzwerkkomponenten. Eine Mithöreinheit kann beispielsweise als Netzwerkauskoppler, der die Datenpakete kopiert, oder eine Auskoppeleinrichtung, die von der Kommunikationsleitung abgestrahlte elektro-magnetischen Felder detektiert und in Signale bzw. Daten umwandelt.

In der Datenspeichereinheit 18 können die aus dem ersten Netzwerk erfassten Daten für Überwachungszwecke ungefiltert und rekonstruiert abgelegt und insbesondere archiviert werden. Durch die digitale Signatur kann eine nachträgliche Manipulation erkannt werden, so dass Datenübertragungen überprüfbar und nachweisbar sind. Dies ist insbesondere für sicherheitsrelevante Netzwerke, die einer Zulassung bedürfen, von Vorteil.

Eine Filterung der ersten Daten durch die Filtereinheit 19 der Anordnung 10 ist beispielsweise durch VLAN-Tags auf Übertragungsebene, eine anwendungsspezifische Kennung auf Transport- oder darüber liegender Protokollebene möglich. Redundant vorliegende erste Daten können in einer Rekonstruktionseinheit 20 verglichen werden und lediglich eines der Datenpakete bei der Rekonstruktion verwendet werden. In der Rekonstruktionseinheit 20 wird die Kommunikation der ersten Anwendung rekonstruiert, indem beispielsweise lediglich solche ersten Daten erfasst werden, die einer Anfragenachricht zuordenbar sind bzw. zusätzlich eine zeitliche Korrelation zwischen Anfragenachricht und Antwort-Datenpaket vorliegt, beispielsweise einem vorgegebenen zeitlichen Abstand entspricht.

Die ersten Daten werden dann beispielsweise in Form einer Datenbank oder einer XML-Datei bereitgestellt und in einem Datenserver 21 der Anordnung 10 abgespeichert. Die ersten Daten sind als Ganzes oder in Teilen abfragbar bzw. auswertbar.

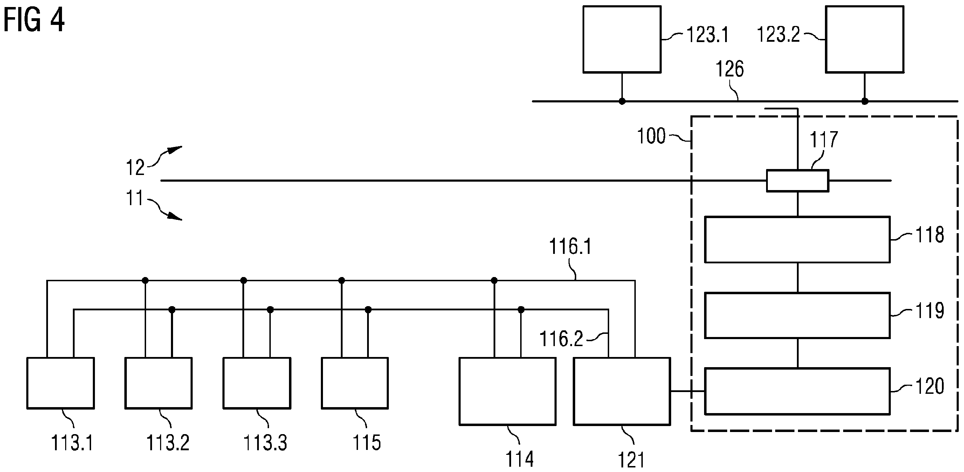

Figur 4 zeigt nun eine rückwirkungsfreie Übertragung von Daten von einem zweiten weniger sicherheitsrelevanten Netz hinein in ein sicherheitskritisches erstes Netz 11. Dies ist beispielsweise zum Fernladen von Software, Firmware, Konfigurations- oder Betriebsdaten, wie Fahrplandaten, die innerhalb des sicherheitskritischen ersten Netzwerkes 11 verfügbar gemacht werden sollen, von Vorteil. Auch hier ist sicherzustellen, dass durch das Füllen eines Datenservers 121, hier beispielsweise einem Ladeserver im ersten Netzwerk, keine Beeinflussung der Steuerungskommunikation im ersten Netzwerk 11 erfolgen kann.

Das erste Netzwerk 11 umfasst Komponenten 113.1, 113.2, 113.3 sowie einen ersten Anwendungsserver 114, beispielsweise einen Diagnoseserver, sowie einen zweiten Anwendungsserver 115, beispielsweise einen Steuerungsserver, und einen Datenserver 121. Diese Netzwerkkomponenten sind redundant, beispielsweise über einen doppelt ausgelegten Datenbus, mit Kommunikationsverbindungen 116.1, 116.2 über jeweils zwei Netzwerkschnittstellen miteinander verbunden. Zusätzlich ist der Datenserver 121 mit einer Rekonstruktionseinheit 120 der Anordnung 100 verbunden. Im zweiten Netzwerk 12 werden zweite Daten, wie beispielsweise Softwarestände, Firmware oder Konfigurationsoder Betriebsdaten, von einem Bereitstellungs-Client 123.1 auf einen externen "Dummy"-Ladeserver 123.2 über eine Kommunikationsverbindung 126 übertragen.

Die Anordnung 100 umfasst eine Mithöreinheit 117, die die zweiten Daten während der Übertragung auf der Kommunikationsverbindung 126 im zweiten Netzwerk 12 dupliziert und in eine Datenspeichereinheit 118 der Anordnung 100 übermittelt. Die Anordnung 100 umfasst des Weiteren eine Filtereinheit 119 sowie eine Rekonstruktionseinheit 120 entsprechend der Anordnung 10. In der Datenspeichereinheit 118 können, wie bei der Anordnung 10, die erfassten Daten ungefiltert gespeichert und beispielsweise zusammen mit einem Übertragungszeitpunkt zu Überwachungszwecken archiviert werden. Die Filtereinheit 119 ist derart ausgebildet, die zweiten Daten aus den von der Mithöreinheit 117.1, 117.2 erfassten Daten auszufiltern und an eine Rekonstruktionseinheit 120 weiterzugeben. Die Rekonstruktionseinheit 120 ist derart ausgebildet, die zweiten Daten einer rekonstruierten Kommunikation der zweiten Anwendung nur nach einer erfolgreichen Rekonstruktion an den Ladeserver 121 im ersten Netzwerk 11 zu übermitteln.

Die Anordnung 100 kann beispielsweise für ein kontrolliertes Ausrollen von SW-Patches verwendet werden. Dabei ist beispielsweise eine Validierungseinheit im externen Ladeserver 123.2 eingerichtet. Der Bereitstellungs-Client 123.1 sendet über die Kommunikationsverbindung 126 eine Startnachricht an den Ladeserver 123.2 und beginnt anschließend eine Übertragung der zweiten Daten an den Ladeserver 123.2. Anschließend werden die zweiten Daten beispielsweise mittels eines Virensuchlaufs, anhand einer Positivliste oder mittels einer Signaturprüfung von der Validierungseinheit im Ladeserver 123.2 überprüft. Nach einer vollständigen Übertragung der Daten und erfolgreich abgeschlossenen Überprüfung sendet der externe Ladeserver 123.2 eine Bestätigungsnachricht an den Bereitstellungs-Client 123.1. Die Startnachricht, die zweiten Daten sowie die abschließende Bestätigungsnachricht werden über die Mithöreinheit 117 vom zweiten Netzwerk in das erste Netzwerk übermittelt und dort von der Filtereinheit 119 bzw. Rekonstruktionseinheit 120 ausgewertet und rekonstruiert. Erst wenn die Bestätigungsnachricht empfangen und in der Rekonstruktionseinheit 120 der Startnachricht zugeordnet werden kann, werden die rekonstruierten zweiten Daten an den Datenserver 121 in das erste Netzwerk 11 ausgegeben. Die Übertragung der zweiten Daten vom Ladeserver 121 an die Komponenten 113.1, 113.2, 113.3, 114, 115 des ersten Netzwerks 11 kann manuell durch einen Wartungstechniker gestartet werden. Es kann auch ein separates Start-Kommando über den erfindungsgemäßen Lademechanismus übertragen werden, der das Übertragen der vorher auf den Datenserver 121 replizierten zweiten Daten auf die Komponenten 113.1, 113.2, 113.3, 114, 115 des ersten Netzwerks 11 startet.

Bei einer solchen Übertragung bzw. solchem Lademechanismus vom zweiten Netzwerk 12 mit geringen Sicherheitsanforderungen in das erste sicherheitskritische Netzwerk 11 können Rückwirkungen auf das erste Netzwerk 11 minimiert werden. Auch wird hier eine strikte physikalische Separierung erreicht, so dass eine Rückwirkungsfreiheit mit hoher Zuverlässigkeit gewährleistet ist. Durch den Datenserver 121 im ersten Netzwerk wird ein direktes bzw. automatisches Einspielen von geladenen Daten auf die Komponenten des ersten Netzwerks verhindert werden. Eine Überprüfung der zu ladenden zweiten Daten wird im zweiten Netzwerk durch den externen Lade-Server 123.2 durchgeführt, sodass keine zusätzliche Last dafür im ersten Netzwerk 11 entsteht. Außerdem wird eine erneute Übertragung von zweiten Daten im zweiten Netzwerk 12 nach einer Validierung die zweiten Daten im zweiten Netzwerk hinfällig. Damit ist eine Manipulation der zweiten Daten im zweiten Netzwerk 12 nicht möglich.

Die einzelnen Einheiten der Anordnung 10, 100 können in integrierter Form aber auch als physikalisch separate Einheiten ausgebildet sein. Der in Figur 4 als physikalisch getrennte Einheit dargestellte Datenserver 121, kann auch integriert mit der Anordnung 100 ausgebildet sein.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur rückwirkungsfreien Übertragung von Daten zwischen Netzwerken mit unterschiedlicher Sicherheitsanforderung, bei dem in einem ersten Netzwerk mit hoher Sicherheitsanforderung erste Daten von einer ersten Anwendung in einer Kommunikation ausschließlich zwischen Komponenten innerhalb des ersten Netzwerks über mehrere Kommunikationsverbindungen (16.1, 16.2) übertragen (2) werden, wobei
- Daten im ersten Netzwerk (11) von mindestens einer Mithöreinrichtung (17.1, 17.2) je Kommunikationsverbindung (16.1, 16.2), die eine Einwegkommunikation realisiert, passiv mitgehört und rückwirkungsfrei erfasst (3), und in ein zweites Netzwerk (12) mit geringeren Sicherheitsanforderungen übermittelt (4) werden und
wobei zweite Daten einer zweiten Anwendung zwischen Komponenten (123.1, 123.2) innerhalb des zweiten Netzwerks (12) übertragen (5) werden,
- Daten im zweiten Netzwerk (12) von mindestens einer zweiten Mithöreinrichtung (117) erfasst (6) und in das erste Netzwerk (11) übermittelt (7) werden,
- eine rekonstruierte Kommunikation der zweiten Anwendung aus den erfassten Daten erstellt wird (8) und lediglich bei erfolgreicher Rekonstruktion zweite Daten an Komponenten des ersten Netzwerks übermittelt (9) werden.

2. Verfahren nach Anspruch 1, wobei alle erfassten Daten in einer Datenspeichereinheit (18, 118) ungefiltert abgespeichert werden.

3. Verfahren nach einem der Ansprüche 1 bis 2, wobei die ersten Daten durch eine Filtereinheit (19) im zweiten Netzwerk (12) bzw. die zweiten Daten durch eine Filtereinheit (119) bzw. ersten Netzwerk (11) aus allen erfassten Daten gefiltert werden.

4. Verfahren nach Anspruch 3, wobei
die ersten bzw. zweiten Daten der ersten bzw. zweiten Anwendung durch eine Anwendungs-spezifische Kennung, insbesondere auf Transportebene, identifiziert und gefiltert werden.

5. Verfahren nach Anspruch 3 oder 4, wobei im zweiten Netzwerk eine rekonstruierte Kommunikation der ersten Anwendung aus den ersten Daten in einer Rekonstruktionseinheit (20) bzw. im ersten Netzwerk eine rekonstruierte Kommunikation der zweiten Anwendung aus den zweiten Daten in einer Rekonstruktionseinheit (120) erstellt wird.

6. Verfahren nach Anspruch 5, wobei
zur Rekonstruktion der Kommunikation der ersten bzw. zweiten Anwendung nur eindeutig zu einer Anfragenachricht gehörende Antwort-Datenpakete verwendet werden.

7. Verfahren nach Anspruch 5 oder 6, wobei lediglich die Antwort-Datenpakete, die in einem vorgegebenen zeitlichen Abstand nach einer Anfragenachricht empfangen werden, zur Rekonstruktion verwendet werden.

8. Verfahren nach einem der vorangehenden Ansprüche, wobei die ersten Daten in einem Datenserver (21) bzw. die zweiten Daten in einem Datenserver (121) abgelegt werden und durch ein externes Kommando, auf Anfrage von Komponenten des zweiten bzw. ersten Netzwerks oder vom Datenserver (21, 121) selbst initiiert vom Datenserver (21) an Komponenten des zweiten Netzwerks (12) bzw. vom Datenserver (121) an Komponenten des ersten Netzwerks (11) übertragen werden.

9. Verfahren nach einem der vorangehenden Ansprüche, wobei ein Übertragungszeitpunkt der erfassten Daten erfasst wird und der Übertragungszeitpunkt zusammen mit den erfassten Daten digital signiert abgespeichert wird.

10. Anordnung zur rückwirkungsfreien Übertragung von Daten zwischen Netzwerken (11, 12) mit unterschiedlicher Sicherheitsanforderung, wobei in einem ersten Netzwerk (11) mit hoher Sicherheitsanforderung erste Daten von einer ersten Anwendung in einer Kommunikation ausschließlich zwischen Komponenten (13.1, 13.2, 13.3, 14, 15) innerhalb des ersten Netzwerks (11) über mehrere Kommunikationsverbindungen (16.1, 16.2) übertragen werden und wobei zweite Daten einer zweiten Anwendung zwischen Komponenten (123.1, 123.2) des zweiten Netzwerks (12) übertragen werden, umfassend
- mindestens eine Mithöreinrichtung (17.1, 17.2) je Kommunikationsverbindung (16.1, 16.2), die eine Einwegkommunikation realisiert und derart ausgebildet ist Daten im ersten Netzwerk (11) von jeweils einer Kommunikationsverbindung (16.1, 16.2) passiv mitzuhören und rückwirkungsfrei zu erfassen und in ein zweites Netzwerk (12) mit geringeren Sicherheitsanforderungen zu übermitteln, und
- eine Datenspeichereinheit (18), die im zweiten Netzwerk angeordnet ist und die erfassten Daten speichert, , - mindestens eine zweite Mithöreinrichtung (117), die derart ausgebildet ist Daten im zweiten Netzwerk (12) zu erfassen und in das erste Netzwerk (11) zu übermitteln, und
- eine zweite Rekonstruktionseinheit (120), die derart ausgebildet ist eine rekonstruierte Kommunikation der zweiten Anwendung aus den erfassten Daten zu erstellen und lediglich bei erfolgreicher Rekonstruktion zweite Daten an Komponenten (113.1, 113.2, 113.3, 114, 115) des ersten Netzwerks (11) zu übermitteln.

11. Anordnung nach Anspruch 10, wobei die erste bzw. zweite Mithöreinheit (17.1, 17.2) ausgebildet als
- ein Netzwerk-Auskoppler (Tap),
- eine Einrichtung mit einer Netzwerkschnittstelle zum ersten Netzwerk, deren Kontakte für Sendesignale deaktiviert sind, oder
- eine Auskoppeleinrichtung für elektromagnetische Abstrahlung.

12. Anordnung nach einem der Ansprüche 10 oder 11, wobei die Datenspeichereinheit (18) derart ausgebildet ist alle erfassten Daten ungefiltert abzuspeichern.

13. Anordnung nach einem der Ansprüche 10 oder 12, zusätzlich umfassend eine Filtereinheit (19, 119), die derart ausgebildet ist die ersten Daten bzw. die zweiten Daten aus allen erfassten Daten zu filtern.

14. Anordnung nach einem der Ansprüche 10 bis 13, zusätzlich umfassend eine Rekonstruktionseinheit (20, 120), die derart ausgebildet ist, zur Rekonstruktion der Kommunikation der ersten Anwendung nur eindeutig zu einer Anfragenachricht gehörende Antwort-Datenpakete zur Auswertung zu verwenden.

15. Anordnung nach einem der Ansprüche 10 bis 14, zusätzlich umfassend einen Datenserver (21, 121), der derart ausgebildet ist die rekonstruierten ersten bzw. zweiten Daten zu speichern.

16. Computerprogrammprodukt, das direkt in einen Speicher eines digitalen Computers ladbar ist, umfassend Programmcodeteile, die bei Ihrer Ausführung durch den digitalen Computer dazu geeignet sind, die Schritte des Verfahrens nach einem der Ansprüche 1 bis 9 durchzuführen.

## Claims

1. Method for decoupled transmission of data between networks with different security requirements, in which first data are transmitted (2) in a first network with high security requirements by a first application in a communication exclusively between components within the first network via multiple communication connections (16.1, 16.2), wherein
- data are passively monitored and captured in decoupled fashion (3) in the first network (11) by at least one monitoring device (17.1, 17.2) per communication connection (16.1, 16.2) that produces a one-way communication, and are transferred (4) to a second network (12) with lower security requirements
and
wherein second data of a second application are transmitted (5) between components (123.1, 123.2) within the second network (12),
- data are captured (6) in the second network (12) by at least one second monitoring device (117) and are transferred (7) to the first network (11),
- a reconstructed communication of the second application is created (8) from the captured data and, just in the event of successful reconstruction, second data are transferred (9) to components of the first network.

2. Method according to Claim 1, wherein all of the captured data are stored in unfiltered form in a data storage unit (18, 118) .

3. Method according to either of Claims 1 and 2, wherein
the first data are filtered from all of the captured data by a filter unit (19) in the second network (12) and the second data are filtered from all of the captured data by a filter unit (119) in the first network (11).

4. Method according to Claim 3, wherein
the first and second data of the first and second applications are identified and filtered by an application-specific identifier, particularly at transport level.

5. Method according to Claim 3 or 4, wherein a reconstructed communication of the first application is created in the second network from the first data in a reconstruction unit (20) and a reconstructed communication of the second application is created in the first network from the second data in a reconstruction unit (120).

6. Method according to Claim 5, wherein
the communication of the first and second applications is reconstructed by using only response data packets that explicitly belong to a request message.

7. Method according to Claim 5 or 6, wherein just the response data packets that are received in a prescribed interval of time after a request message are used for reconstruction.

8. Method according to one of the preceding claims, wherein the first data are stored in a data server (21) and the second data are stored in a data server (121) and are transmitted by an external command, at the request of components of the second and first networks or on initiation by the data server (21, 121) itself, from the data server (21) to components of the second network (12) and from the data server (121) to components of the first network (11).

9. Method according to one of the preceding claims, wherein a transmission time of the captured data is recorded and the transmission time is stored together with the captured data in digitally signed form.

10. Arrangement for decoupled transmission of data between networks (11, 12) with different security requirements, wherein first data are transmitted in a first network (11) with high security requirements by a first application in a communication exclusively between components (13.1, 13.2, 13.3, 14, 15) within the first network (11) via multiple communication connections (16.1, 16.2) and wherein second data of a second application are transmitted between components (123.1, 123.2) of the second network (12), comprising
- at least one monitoring device (17.1, 17.2) per communication connection (16.1, 16.2) that produces a one-way communication and is configured to passively monitor, and to capture in decoupled fashion, data in the first network (11) from a respective communication connection (16.1, 16.2) and to transfer said data to a second network (12) with lower security requirements, and
- a data storage unit (18) that is arranged in the second network and stores the captured data,
- at least one second monitoring device (117) that is configured to capture data in the second network (12) and to transfer said data to the first network (11), and
- a second reconstruction unit (120) that is configured to create a reconstructed communication of the second application from the captured data and, just in the event of successful reconstruction, to transfer second data to components (113.1, 113.2, 113.3, 114, 115) of the first network (11).

11. Arrangement according to Claim 10, wherein the first and second monitoring units (17.1, 17.2) are configured as
- a network output coupler (tap),
- a device having a network interface to the first network, the contacts of which network interface are deactivated for transmission signals, or
- an output coupling device for electromagnetic emitted radiation.

12. Arrangement according to either of Claims 10 and 11, wherein the data storage unit (18) is configured to store all of the captured data in unfiltered form.

13. Arrangement according to either of Claims 10 and 12, additionally comprising a filter unit (19, 119) that is configured to filter the first data and the second data from all of the captured data.

14. Arrangement according to one of Claims 10 to 13, additionally comprising a reconstruction unit (20, 120) that is configured to reconstruct the communication of the first application by using only response data packets that explicitly belong to a request message for evaluation.

15. Arrangement according to one of Claims 10 to 14, additionally comprising a data server (21, 121) that is configured to store the reconstructed first and second data.

16. Computer program product that can be loaded directly into a memory of a digital computer, comprising program code parts that, when executed by the digital computer, are suitable for performing the steps of the method according to one of Claims 1 to 9.

## Revendications

1. Procédé destiné à la transmission sans effet rétroactif de données entre réseaux avec une exigence de sécurité différente, dans lequel dans un premier réseau avec une exigence de sécurité élevée des premières données sont transmises (2) par une première application dans une communication exclusivement entre des composants au sein du premier réseau par l'intermédiaire de plusieurs liaisons de communication (16.1, 16.2), dans lequel
- des données dans le premier réseau (11) sont transmises par au moins un système de surveillance (17.1, 17.2) pour chaque liaison de communication (16.1, 16.2) qui réalise une communication unidirectionnelle, sont surveillées de manière passive et saisies sans effet rétroactif (3) et transmises (4) dans un second réseau (12) avec des exigences de sécurité moins élevées
et
dans lequel des secondes données d'une seconde application entre des composants (123.1, 123.2) sont transmises (5) au sein du second réseau (12),
- des données dans le second réseau (12) sont saisies (6) par au moins un second dispositif de surveillance (117) et transmises (7) dans le premier réseau (11),
- une communication reconstituée de la seconde application est générée (8) à partir des données saisies et, uniquement lors d'une reconstitution réussie, des secondes données sont transmises (9) à des composants du premier réseau.

2. Procédé selon la revendication 1, dans lequel toutes les données saisies dans l'unité de stockage de données (18, 118) sont stockées de manière non filtrée.

3. Procédé selon l'une quelconque des revendications 1 à 2, dans lequel les premières données sont filtrées par le biais d'une unité formant filtre (19) dans le second réseau (12) resp. les secondes données sont filtrées par le biais d'une unité formant filtre (119) resp. d'un premier réseau (11) à partir de toutes les données saisies.

4. Procédé selon la revendication 3, dans lequel les premières ou secondes données de la première resp. de la seconde application sont identifiées et filtrées par le biais d'une reconnaissance spécifique à l'application, en particulier sur le plan de transport.

5. Procédé selon la revendication 3 ou 4, dans lequel dans le second réseau une communication reconstituée de la première application est générée à partir des premières données dans une unité de reconstitution (20) resp. dans le premier réseau une communication reconstituée de la seconde application est générée à partir des secondes données dans une unité de reconstitution (120).

6. Procédé selon la revendication 5, dans lequel pour la reconstitution de la communication de la première resp. de la seconde application seuls des paquets de données en réponse appartenant sans équivoque à un message de demande sont utilisés.

7. Procédé selon la revendication 5 ou 6, dans lequel seuls les paquets de données en réponse qui sont reçus dans un intervalle de temps prédéfini après un message de demande sont utilisés pour une reconstitution.

8. Procédé selon l'une quelconque des revendications précédentes, dans lequel les premières données sont déposées dans un serveur de données (21) resp. les secondes données sont déposées dans un serveur de données (121) et par le biais d'une commande externe sont auto-initiées sur demande de composants du second resp. du premier réseau ou du serveur de données (21, 121) et transmises par le serveur de données (21) à des composants du second réseau (12) ou par le serveur de données (121) à des composants du premier réseau (11).

9. Procédé selon l'une quelconque des revendications précédentes, dans lequel un moment de transmission des données saisies est saisi et le moment de transmission est mémorisé et signé numériquement conjointement avec les données acquises.

10. Système destiné à la transmission sans effet rétroactif de données entre réseaux (11, 12) avec une exigence de sécurité différente, dans lequel dans un premier réseau (11) avec une exigence de sécurité plus élevée des premières données sont transmises par une première application dans une communication exclusivement entre des composants (13.1, 13.2, 13.3, 14, 15) au sein du premier réseau (11) par l'intermédiaire de plusieurs liaisons de communication (16.1, 16.2) et dans lequel des secondes données d'une seconde application entre composants (123.1, 123.2) du second réseau (12) sont transmises, comprenant
- au moins un dispositif de surveillance (17.1, 17.2) pour chaque liaison de communication (16.1, 16.2) qui réalise une communication unidirectionnelle et est configuré de manière à surveiller de manière passive et à saisir sans effet rétroactif des données dans le premier réseau (11) par respectivement une liaison de communication (16.1, 16.2) et à les transmettre dans un second réseau (12) avec des exigences de sécurité plus faibles, et
- une unité de stockage de données (18) qui est disposée dans le second réseau et stocke les données saisies,
- au moins un second système de surveillance (117) qui est configuré de manière à saisir des données dans un second réseau (12) et à les transmettre dans le premier réseau (11), et
- une seconde unité de reconstitution (120) qui est configurée de manière à générer une communication reconstituée de la seconde application à partir des données saisies et à transmettre uniquement en cas de reconstitution réussie des secondes données à des composants (113.1, 113.2, 113.3, 114, 115) du premier réseau (11).

11. Système selon la revendication 10, dans lequel la première resp. la seconde unité de surveillance (17.1, 17.2) est configurée en tant que
- découpleur de réseau (Tap),
- dispositif avec une interface réseau avec le premier réseau, dont des contacts pour des signaux d'envoi sont désactivés, ou
- dispositif de découplage pour un rayonnement électromagnétique.

12. Système selon l'une quelconque des revendications 10 ou 11, dans lequel l'unité de stockage de données (18) est configurée de manière à stocker de manière non filtrée toutes les données saisies.

13. Système selon l'une quelconque des revendications 10 ou 12, comprenant en outre une unité formant filtre (19, 119) qui est configurée de manière à filtrer les premières données resp. les secondes données à partir de toutes les données saisies.

14. Système selon l'une quelconque des revendications 10 à 13, comprenant en outre une unité de reconstitution (20, 120) qui est configurée de manière à utiliser pour la reconstitution de la communication de la première application uniquement des paquets de données en réponse appartenant sans équivoque à un message de demande pour l'évaluation.

15. Système selon l'une quelconque des revendications 10 à 14, comprenant en outre un serveur de données (21, 121) qui est configuré de manière à stocker les premières resp. secondes données reconstituées.

16. Produit de programme informatique qui est chargeable directement dans une mémoire d'un ordinateur numérique, comprenant des parties de code de programme qui sont adéquates lors de leur exécution par le biais de l'ordinateur numérique pour mener à bien les étapes du procédé selon l'une quelconque des revendications 1 à 9.
